# EUROPÄISCHE PATENTSCHRIFT

(11) **EP 1 339 768 B1**
(45) Veröffentlichungstag und Bekanntmachung des Hinweises auf die Patenterteilung: **23.08.2006**
(21) Anmeldenummer: 01996570.6
(22) Anmeldetag: 05.11.2001
(51) Int. Cl.: C08G 18/10, C08G 18/62, C09D 175/04

(54) **BESCHICHTUNGEN AUS SPEZIELLEN POLYOLEN UND OXALSÄURE**
COATINGS CONSISTING OF SPECIAL POLYOLS AND OXALIC ACID
REVETEMENTS EN POLYOLS SPECIAUX ET ACIDE OXALIQUE

(30) Priorität: 16.11.2000 DE 10056759
(43) Veröffentlichungstag der Anmeldung: 03.09.2003
(73) Patentinhaber: Bayer MaterialScience AG, 51368 Leverkusen (DE)
(72) Erfinder: KÖHLER, Burkhard, 51373 Leverkusen (DE); BAUMBACH, Beate, 51399 Burscheid (DE); FÜSSEL, Christian, 47918 Tönisvorst (DE); PROBST, Joachim, 21145 Köln (DE)
(86) Internationale Anmeldenummer: PCT/EP2001/012777
(87) Internationale Veröffentlichungsnummer: WO 2002/040565

(56) Entgegenhaltungen:
- GB-A- 1 111 001
- PATENT ABSTRACTS OF JAPAN vol. 013, no. 553 (C-663), 8. Dezember 1989 (1989-12-08) & JP 01 229085 A (SEKISUI CHEM CO LTD), 12. September 1989 (1989-09-12)
- DATABASE WPI Section Ch, Week 199422 Derwent Publications Ltd., London, GB; Class A14, AN 1994-180837 XP002198239 & SU 467 614 A (NIKONOROV V I), 23. Januar 1993 (1993-01-23)

## Beschreibung

Die Erfindung betrifft Beschichtungen, hergestellt durch Einbrennen einer Mischung aus Polyolen, die frei von Estergruppen sind, mit Oxalsäure, ein Verfahren zu deren Herstellung und so beschichtete Substrate.

Polyole können bekanntlich mit Aminoharzen oder blockierten Isocyanaten bei höheren Temperaturen vernetzt werden (siehe Ullmann's Encyclopedia of Industrial Chemistry, Fifth Edition, Volume A18, Seite 404-405 und 414- 418). Dabei werden unerwünschte Stoffe abgespalten, wie z.B. Formaldehyd oder Blockierungsmittel.

Es bestand daher die Aufgabe, Einbrennlacke zu finden, die hauptsächlich unbedenkliche Produkte, wie z.B. Wasser, abspalten.

Es wurde nun gefunden, dass Mischungen aus Ester-freien Polyolen und Oxalsäure bei erhöhten Temperaturen zu lösungsmittelfesten, harten Beschichtungen vernetzen.

Gegenstand der Erfindung sind daher Beschichtungen, erhältlich durch Einbrennen von Mischungen aus
A) 1 Gew.-Teil Ester-freien Polyolen mit einem OH-Gehalt von 1 bis 10 %,
B) 0,05 bis 1 Gew.-Teil Oxalsäure,
C) 0,2 bis 5 Gew.-Teile organische Lösungsmittel und
D) gegebenenfalls Pigmenten und Lackhilfsmitteln
bei Temperaturen von 120°C bis 250°C und einer Einbrenndauer von 1 bis 100 min auf Substraten.

Der Lackauftrag (aufbringen der Mischung auf Substrate) erfolgt durch Rakeln, Spritzen, Gießen oder Tauchen. Das Einbrennen erfolgt dann bei Temperaturen von 120°C bis 250°C in Anwesenheit von Luft oder Inertgas und dauert 1 bis 100 min.

Erfindungsgemäß einzusetzende esterfreie Polyole A) sind Copolymere aus Ester-freien vinylischen Monomeren, wie z.B. Styrol, 3- oder 4-Methylstyrol, Acrylnitril, alpha-Methylstyrol, Cyclohexylvinylether, Butylvinylether oder Methylvinylether, mit Ester-freien, OH-funktionellen, vinylischen Copolymeren, wie z.B. Allylalkohol, mit Ethenoxid oder Propenoxid hydroxyalkyliertem Allylalkohol, Hydroxymethylnorbomen, Trimethylolpropanmonoallylether, Glycerinmonoallylether, Hydroxyethylvinylether, Hydroxybutylvinylether oder Cyclohexandimethanolmonovinylether, die vorzugsweise mit Diisocyanaten, wie Bis(4-isocyanatocyclohexyl)methan, 4,4'-Diisocyanatodiphenylmethan, Tolylendiisocyanat, Isophorondiisocyanat, Hexamethylendiisocyanat vorverlängert werden.

Es können erfindungsgemäß auch esterfreie Monomere mit Allylglycidylether copolymerisiert werden, wobei dann der Epoxidring durch Wasser, Monoalkohole oder sekundäre Amine geöffnet wird und anschließend gegebenenfalls mit Diisocyanaten vorverlängert wird.

Auch die Umsetzungsprodukte aus Polyolen, wie z.B. Trimethylolpropan, Trimethylolethan oder Pentaerythrit oder deren Umsetzungsprodukte mit Ethenoxid oder Propenoxid mit Diisocyanaten vorverlängert (Prepolymere), können erfindungsgemäß als Komponente A) eingesetzt werden.

Ebenfalls können durch Ketalgruppen geschützte Polyole, wie z.B. die Monoketale aus Pentaerythrit mit Aceton, Cyclohexanon oder Benzaldehyd, oder die Diketale aus Zuckeralkoholen, wie Sorbit oder Mannit, mit Aceton, Cyclohexanon oder Benzaldehyd mit Diisocyanaten zu Polykondensaten umgesetzt werden, wobei anschließend die Ketalschutzgruppen abgespalten werden.

Bevorzugt sind Komponenten A), die Urethangruppen enthalten.

Komponente B) ist Oxalsäure, die vorzugsweise vor der Mischung mit den anderen Komponenten in einem dipolar-aprotischen Lösungsmittel, vorzugsweise N-Methylpyrolidon, Dimethylacetamid und/oder Dimethylformamid, vorgelöst wird, wobei die Lösung vorzugsweise 10 bis 40 Gew.-%ig ist.

Komponente C) sind z.B. aromatische Kohlenwasserstoffe, wie z.B. Toluol, Xylol oder Gemische alkylierter Aromaten, esterhaltige Lösungsmittel, wie z.B. Butylacetat, Methoxypropylacetat, Methoxyethylacetat oder Ethylacetat, etherhaltige Lösungsmittel, wie z.B. Ethylenglykoldimethylether, Ethylenglykoldiethylether, Diethylenglykoldimethylether, Dioxan oder Tetrahydrofuran oder dipolar-aprotische Lösungsmittel, wie z.B. N-Methylpyrrolidon, Dimethylacetamid, Dimethylformamid, Dimethylsulfoxid, N-Methylcaprolactam, Dimethylsulfon oder Sulfolan, wobei die dipolar-aprotischen Lösungsmittel vorzugsweise zum Vorlösen der Oxalsäure eingesetzt werden.

Die Mischung der Komponenten A) bis D) kann prinzipiell in beliebiger Reihenfolge bei Temperaturen unter 50°C unter Scherung (z.B. Rühren) erfolgen. Vorzugsweise wird die Oxalsäure in einem dipolar-aprotischen Lösungsmittel vorgelöst, wobei die Zugabe dieser Lösung zu den anderen Komponenten zu beliebigen Zeiten erfolgen kann.

Die Mischung der Komponenten A) bis D) ist bei Raumtemperatur mindestens 2 Wochen stabil, so dass ein lagerfähiger Einkomponenten-Lack formuliert werden kann. Jedoch kann die Zudosierung der Lösung von Oxalsäure in einem dipolar-aprotischen Lösungsmittel auch unmittelbar vor der Applikation erfolgen.

Zusätzlich zur Oxalsäure können auch weitere Härter, wie z.B. Aminoharze, blockierte Isocyanate oder vorzugsweise Epoxide in Mengen von 1 bis 20 Gew.-Teilen bezogen auf 100 Gew.-Teile der Mischung A) bis D) zugesetzt werden.

Die erfindungsgemäßen Beschichtungen können auf allen oberhalb von 160°C stabilen Untergründen (Substrate), wie z.B. Metallen, Glas, Hochtemperatur-Kunststoffen oder mineralischen Untergründen, eingesetzt werden. Ein weiterer Gegenstand der Erfindung sind daher Substrate, beschichtet mit den erfindungsgemäßen Beschichtungen.

Sie zeichnen sich durch eine hohe Härte und Lösungsmittelbetändigkeit aus. Beim Einbrennen werden nur die Lösungsmittel und Wasser (durch Veresterung der OH-Gruppen mit der Oxalsäure) abgegeben, aber keine Produkte, wie Formaldehyd oder Blockierungsmittel für Isocyanate.

### Beispiele

### Beispiel 1

Man versetzt 270 g SAA (Styrol-Allylalkohol-Copolymer; Molmasse Mn = 1600, OH-Gehalt 6 %) mit 200 g MPA (Methoxypropylacetat), gibt 6,5 g MDI (4,4'-Diisocyanato-diphenylmethan) in 34 g NMP (N-Methylpyrrolidon) hinzu und erhitzt 4 h auf 120°C.

Man versetzt 100 Gew.-Teile dieser Lieferform mit 30 Gew.-Teilen einer 33 %igen Lösung von Oxalsäure in NMP.

### Beispiel 2

Man versetzt 300 g SAA in 286 g MPA mit 15,1 g HDI (Hexamethylendiisocyanat) und erhitzt 4 h auf 120°C.

Man versetzt 100 Gew.-Teile dieser Lieferform mit 30 Gew.-Teilen einer 33 %igen Lösung von Oxalsäure in NMP.

### Beispiel 3

Man versetzt 300 g SAA in 286 g MPS mit 20 g IPDI (Isophorondiisocyanat) und erhitzt 4 h auf 120°C.

Man versetzt 100 Gew.-Teile dieser Lieferform mit 30 Gew.-Teilen einer 33 %igen Lösung von Oxalsäure in NMP.

### Beispiel 4

Man versetzt 300 g SAA in 286 g MPA mit 17,7 g Bis(4-isocyanatocyclohexyl)-methan und erhitzt 4h auf 120°C.

Man versetzt 100 Gew.-Teile dieser Lieferform mit 30 Gew.-Teilen einer 33 %igen Lösung von Oxalsäure in NMP.

Die Mischungen nach den Beispielen 1 bis 4 werden in einer Nassfilmdicke von 180 µm auf eine Glasplatte aufgerakelt, bei 160°C 10, 20 und 30 min eingebrannt. Man erhält folgende Pendelhärten (nach König [s]):

| | **Beispiel 1** | **Beispiel 2** | **Beispiel 3** | **Beispiel 4** |
|---|---|---|---|---|
| 10 min | 166 | 172 | 136 | 174 |
| 20 min | 177 | 180 | 166 | 174 |
| 30 min | 180 | 182 | 144 | 177 |

Alle Beschichtungen sind gegen 100 Doppelhübe im MEK-Wischtest stabil.

### Vergleichsbeispiel

Man erhitzt die Mischung aus 40 g Hydroxyethylmethacrylat, 40 g Styrol, 20 g Butylacrylat, 80 g MPA und 0,5 g Azobisisobutyronitril 24 h auf 65°C und 1 h auf 120°C.

Man versetzt mit 54 g einer 33 %igen Lösung von Oxalsäure in NMP.

Man brennt 30 min bei 160°C ein. Der Film ist klebrig und in MEK löslich.

Die OH-Gruppe ist über eine Estergruppe an das Lackharz gebunden. Dies verhindert offensichtlich eine Vernetzung der Mischung.

## Patentansprüche

1. Beschichtungen, erhältlich durch Einbrennen von Mischungen aus
A) 1 Gew.-Teil Ester-freien Polyolen mit einem OH-Gehalt von 1 bis 10%,
B) 0,05 bis 1 Gew.-Teil Oxalsäure,
C) 0,2 bis 5 Gew.-Teile organische Lösungsmittel und
D) gegebenenfalls Pigmenten und Lackhilfsmitteln
bei Temperaturen von 120°C bis 250°C und einer Einbrenndauer von 1 bis 100 min auf Substrate.

2. Verfahren zur Herstellung von Beschichtungen nach Anspruch 1, **dadurch gekennzeichnet, dass** die Mischung der Komponenten A) bis D) auf einen Untergrund aufgebracht wird und 1 bis 100 min bei Temperaturen von 120°C bis 250°C eingebrannt wird.

3. Substrate, beschichtet gemäß Anspruch 1.

## Claims

1. Coatings obtainable by stoving mixtures of
A) 1 part by weight of ester-free polyols having an OH content of 1 to 10%,
B) 0.05 to 1 part by weight of oxalic acid,
C) 0.2 to 5 parts by weight of organic solvents and
D) optionally pigments and lacquer auxiliaries
at temperatures of 120°C to 250°C and a stoving time of 1 to 100 min on substrates.

2. Process for the production of coatings according to claim 1, **characterised in that** the mixture of components A) to D) is applied onto a base and stoved at temperatures of 120°C to 250°C for 1 to 100 minutes.

3. Substrates coated according to claim 1.

## Revendications

1. Revêtements, obtenus par cuisson de mélanges de
A) 1 partie en poids de polyols sans ester avec une teneur en OH de 1 à 10 %,
B) 0,05 à 1 partie en poids d'acide oxalique,
C) 0,2 à 5 parties en poids de solvants organiques et
D) le cas échéant des pigments et adjuvants pour vernis
à des températures de 120°C à 250°C et après une durée de cuisson de 1 à 100 min sur des substrats.

2. Procédé de fabrication de revêtements suivant la revendication 1, **caractérisé en ce que** le mélange des composants A) à D) est appliqué sur un support et cuit pendant 1 à 100 min à des températures de 120°C à 250°C.

3. Substrats, revêtus suivant la revendication 1.
